# FASCICULE DE BREVET EUROPEEN

(11) **EP 1 733 630 B1**
(45) Date de publication et mention de la délivrance du brevet: **06.01.2010**
(21) Numéro de dépôt: 06290922.1
(22) Date de dépôt: 06.06.2006
(51) Int. Cl.: A23L 1/22, A23B 7/022

(54) **Procedé de sechage d'un produit vegetal sans msg, et produit ainsi obtenu**
Verfahren zur Trocknung eines MSG-freien Produktes aus pflanzlichem Herkunft, und Produkt selbst
Process for the drying of a msg-free product of plant origin, and product so obtained

(30) Priorité: 17.06.2005 FR 0506175
(43) Date de publication de la demande: 20.12.2006
(73) Titulaire: Darome, 91490 Milly La Foret (FR)
(72) Inventeur: Darbonne, Luc, 91490 Oncy sur Ecole (FR)
(74) Mandataire: Novagraaf IP

(56) Documents cités:
- EP-A- 0 087 717
- FR-A- 2 649 297
- US-A- 5 702 750
- US-A- 5 858 446
- US-A1- 2002 031 598
- US-A1- 2004 131 635
- PATENT ABSTRACTS OF JAPAN vol. 018, no. 395 (C-1229), 25 juillet 1994 (1994-07-25) & JP 06 113789 A (NIPPON PAPER IND CO LTD), 26 avril 1994 (1994-04-26)

## Description

Le produit selon l'invention s'utilise plus particulièrement pour la préparation de soupes, de sauces, de plats cuisinés, comme produit d'enrobage pour des aliments secs ou comme condiment. En effet, de nombreuses recettes de cuisines nécessitent l'utilisation d'épices ou d'aromates qui, pour des raisons de logistique et de contraintes industrielles, sont préférentiellement conditionnés sous forme séchée.

Toutefois, les contraintes d'utilisation ne doivent pas être satisfaites au détriment notamment de l'arôme, de l'aspect (forme, couleur, ...) et de la tenue mécanique du produit végétal mis en oeuvre.

On connaît du document EP-B-0 087 717 un produit végétal sec épicé à bon écoulement formé d'épices et/ou d'aromates séchés et divisés. Pour obtenir un produit séché présentant un arôme et une couleur conformes à ceux du produit frais, le document EP-B-0 087 717 enseigne de tamponner le mélange à sécher par addition de glutamate mono sodique (MSG) de sorte à relever le pH de la sève du produit pendant le séchage.

Bien que de tels produits ait été commercialisés de façon importante en donnant satisfaction, il s'avère, notamment pour des raisons d'acceptation consommateur, souhaitable de s'affranchir de l'utilisation du MSG sans naturellement dégrader la qualité du produit séché obtenu.

Pour résoudre ce problème, la demanderesse a conduit des essais intensifs qui ont permis de mettre au point un procédé permettant d'obtenir un produit végétal séché de type épice ou aromate qui présente notamment un arôme et une couleur qui sont conformes au produit frais, et ce sans utilisation du MSG.

A cet effet, et selon un premier aspect, l'invention propose un procédé de séchage d'un produit végétal de type épice ou aromate, ledit procédé comprenant les étapes de :
- prévoir une quantité Q₀ de produit végétal congelé ;
- ajouter et mélanger à sec une quantité qₑ d'un électrolyte avec une quantité q_{g} d'un glucide de sorte à obtenir une quantité homogène Q₁ d'un support hydrosoluble comestible, ledit support étant dépourvu de glutamate mono sodique (MSG) ;
- ajouter et mélanger la quantité Q₀ de produit végétal congelé avec la quantité Q₁ de support, de sorte à obtenir un produit végétal congelé additionné de façon homogène du support ;
- chauffer, à une température comprise entre 50°C et 170°C, le produit additionné pendant un temps suffisant pour obtenir le séchage.

Selon un deuxième aspect, l'invention permet d'obtenir un produit végétal de type épice ou aromate, ledit produit étant séché par mise en oeuvre du procédé selon le premier aspect, ledit produit comprenant, en poids, moins de 3% d'eau, entre 20% et 50% de végétal et entre 35% et 65% d'électrolytes.

D'autres objets et avantages de l'invention apparaîtront au cours de la description qui suit de différents modes de réalisation.

L'invention concerne un procédé de séchage d'un produit végétal de type épice ou aromate, ledit produit séché étant destiné à être utilisé dans des préparations alimentaires comme des soupes, des sauces, des plats cuisinés ou encore comme produit d'enrobage pour des aliments secs.

A titre d'exemple non limitatif, le produit végétal peut être choisi dans le groupe comprenant : l'aneth, le basilic, le céleri, le cerfeuil, la coriandre, le cresson, l'épinard, l'estragon, le fenouil, la livèche, la marjolaine, la menthe, l'oseille, le persil, le poireau, le romarin, la sarriette, le thym, la sauge, l'origan, la lavande, la ciboulette, l'ail, l'échalote, l'oignon, le paprika, la roquette.

De façon avantageuse, ce type de produit végétal est conservé juste après la récolte par tous procédés de congélation connus. Le produit végétal congelé peut être sous la forme de la plante entière ou sous la forme de fractions de cette plante (par exemple les feuilles, les graines, ....).

Le procédé selon l'invention prévoit de sécher une quantité Q₀ de produit végétal préalablement congelé, notamment à une température comprise entre -15°C et -20°C.

Selon une étape du procédé, on ajoute et on mélange à sec une quantité qₑ d'un électrolyte avec une quantité q_{g} d'un glucide de sorte à obtenir une quantité homogène Q₁ d'un support hydrosoluble comestible. Cette étape peut être réalisée dans un mélangeur de poudre alimentaire de structure classique.

Dans un exemple de réalisation, l'électrolyte comprend du chlorure de sodium et/ou du chlorure de potassium, et il est également avantageux d'utiliser un glucide hydrogéné. En effet, un tel mélange confère au produit végétal séché une conservation satisfaisante de l'arôme. Toutefois, en particulier des électrolytes moins riches en sel peuvent être envisagés pour la mise en oeuvre de l'invention.

Le procédé prévoit ensuite d'ajouter et de mélanger la quantité Q₀ de produit végétal congelé avec la quantité Q₁ de support, de sorte à obtenir un produit végétal congelé additionné de façon homogène du support. En particulier, lors de cette étape, le produit végétal peut être maintenu à une température comprise entre -15°C et -20°C de sorte à conserver son caractère congelé. Dans un exemple de réalisation, cette étape est réalisée dans un mélangeur alimentaire isolé thermiquement.

La quantité Q₀ mise en oeuvre peut être comprise entre 60% et 80% du poids total, notamment comprise entre 65% et 75% en poids. En particulier, à l'issue de l'étape mentionnée ci-dessus, le produit végétal congelé est recouvert par le support.

Dans l'étape suivante, le procédé prévoit de chauffer, à une température comprise entre 50°C et 170°C, le produit additionné, et ce pendant un temps suffisant pour obtenir le séchage. En particulier, le séchage s'entend pour une teneur résiduelle en eau dans le produit végétal qui est inférieure à 3%. Cette étape peut être réalisée en disposant le produit additionné en couche fine sur un tapis sans fin, de sorte à faire passer le produit dans un tunnel de chauffage pendant le temps nécessaire. Selon une réalisation, le tunnel de chauffage peut présenter un gradient de température de sorte à améliorer le séchage.

La demanderesse a constaté que la réalisation des étapes mentionnées ci-dessus permettait d'utiliser un support dépourvu de glutamate mono sodique (MSG) tout en obtenant une qualité satisfaisante pour le produit végétal séché. Cette qualité s'exprime notamment tant d'un point de vue des propriétés organoleptiques comme l'arôme (démontré par la teneur en huiles essentielles et par un jury de dégustation) que des propriétés colorimétriques (démontré par des mesures).

Dans un exemple de réalisation, le produit additionné est chauffé à une température maximale comprise entre 125°C et 135°C.

Suivant une réalisation, on peut prévoir que le support comprenne également une quantité qₗ d'un extrait de levure riche en nucléotides, ledit extrait étant ajouté et mélangé en même temps que l'électrolyte et le glucide pour obtenir un support homogène.

Un extrait de levure riche en guanosine 5'-monophosphate (GMP) et/ou en inosine 5'monophosphate (IMP) donne particulièrement satisfaction en tant qu'exhausteur de goût.

En outre, la quantité qₗ d'extrait de levure mise en oeuvre peut être comprise entre 3% et 6% en poids de la quantité Q₁ de support, ce qui est inférieur à la quantité de MSG classiquement utilisée dans l'art antérieur. Par conséquent, la mise en oeuvre de l'invention permet d'obtenir un produit végétal séché qui est plus riche en végétal.

La demanderesse a également déterminé qu'il était avantageux, pour la qualité du produit séché obtenu, que la quantité Q₁ de support soit déterminée en fonction du poids de matière sèche de la quantité Q₀ de produit végétal congelé.

En effet, notamment en fonction des récoltes, la quantité de matière sèche peut varier dans une large mesure, ce qui, si la quantité de support est gardée constante, peut provoquer des dispersions de qualité du produit séché.

En particulier, pour un produit végétal donné, on peut déterminer et utiliser un rapport constant entre le poids de matière sèche et le poids de la quantité Q₁ de support.

L'invention permet ainsi d'obtenir un produit végétal de type épice ou aromate qui est séché par mise en oeuvre d'un procédé tel que décrit ci-dessus, ledit produit comprenant, en poids, moins de 3% d'eau, entre 20% et 50% de végétal et entre 35% et 65% d'électrolytes. Selon une réalisation, le produit végétal comprend en outre moins de 3% en poids d'extrait de levure riche en nucléotides.

On donne ci-dessous deux exemples de réalisation suivant l'invention.

### Exemple 1

Produit végétal congelé : Basilic ; Q₀ = 710 g
Support : 72,4% de sel, 23,1% de glucide, 4,5% d'extrait de levure riche en inosinate et guanylate de sodium ; Q₁ = 290 g
Chauffage pendant 2h30 avec un gradient de température de 130°C à 60°C.

Produit séché : 1,3% d'eau ; 50,8% de sel ; 29,8% de végétal
La couleur et l'arôme ont été testés et donnent satisfaction.

### Exemple 2

Même conditions que exemple 1 avec du persil.

Produit séché : 1,2% d'eau ; 53,2% de sel ; 26,5% de végétal
La couleur et l'arôme ont été testés et donnent satisfaction.

## Revendications

1. Procédé de séchage d'un produit végétal de type épice ou aromate, ledit procédé comprenant les étapes de :
- prévoir une quantité Q₀ de produit végétal congelé ;
- ajouter et mélanger à sec une quantité qₑ d'un électrolyte avec une quantité q_{g} d'un glucide de sorte à obtenir une quantité homogène Q₁ d'un support hydrosoluble comestible, ledit support étant dépourvu de glutamate mono sodique (MSG) ;
- ajouter et mélanger la quantité Q₀ de produit végétal congelé avec la quantité Q₁ de support, de sorte à obtenir un produit végétal congelé additionné de façon homogène du support ;
- chauffer, à une température comprise entre 50°C et 170°C, le produit additionné pendant un temps suffisant pour obtenir le séchage.

2. Procédé de séchage selon la revendication 1, dans lequel le produit végétal est congelé à une température comprise entre -15°C et -20°C.

3. Procédé de séchage selon la revendication 1 ou 2, dans lequel l'électrolyte comprend du chlorure de sodium et/ou du chlorure de potassium.

4. Procédé de séchage selon l'une quelconque des revendications 1 à 3, dans lequel le glucide est hydrogéné.

5. Procédé de séchage selon l'une quelconque des revendications 1 à 4, dans lequel le produit additionné est chauffé à une température maximale comprise entre 125°C et 135°C.

6. Procédé de séchage selon l'une quelconque des revendications 1 à 5, dans lequel le support comprend en outre une quantité qₗ d'un extrait de levure riche en nucléotides.

7. Procédé de séchage selon la revendication 6, dans lequel l'extrait de levure est riche en guanosine 5'-monophosphate (GMP) et/ou en inosine 5'monophosphate (IMP).

8. Procédé de séchage selon la revendication 6 ou 7, dans lequel la quantité qₗ d'extrait de levure est comprise entre 3% et 6% en poids de la quantité Q₁ de support.

9. Procédé de séchage selon l'une quelconque des revendications 1 à 8, dans lequel la quantité Q₁ de support est déterminée en fonction du poids de matière sèche de la quantité Q₀ de produit végétal congelé.

10. Procédé de séchage selon la revendication 9, dans lequel le rapport entre le poids de matière sèche et le poids de la quantité Q₁ de support est déterminé pour un produit végétal donné.

11. Procédé de séchage selon l'une quelconque des revendications 1 à 10, dans la quantité Q₀ est comprise entre 60% et 80% du poids total mis en oeuvre, notamment comprise entre 65% et 75% en poids.

## Claims

1. Drying process of a spice or herb type vegetal product, said process comprising the steps of:
- forecast an amount Q₀ of frozen vegetal product ;
- add and mix in dry condition an amount qₑ of an electrolyte with an amount q_{g} of a carbohydrate in order to obtain an homogenous amount Q₁ of an edible water-soluble support, said support being devoid of monosodic glutamate (MSG) ;
- add and mix the amount Q₀ of frozen vegetal product with the amount Q₁ of support, in order to obtain a frozen vegetal product added in an homogenous way by the support ;
- heat the added product at a temperature comprised between 50°C and 170°C, during a sufficient time to obtain the drying.

2. Drying process according to claim 1, wherein the vegetal product is frozen at a temperature comprised between -15°C and -20°C.

3. Drying process according to claim 1 or 2, wherein the electrolyte comprises sodium chloride and/or potassium chloride.

4. Drying process according to anyone of claims 1 to 3, wherein the carbohydrate is hydrogenated.

5. Drying process according to anyone of claims 1 to 4, wherein the added product is heated at a maximal temperature comprised between 125°C and 135°C.

6. Drying process according to anyone of claims 1 to 5, wherein the support further comprises an amount qₗ of an yeast extract which is rich in nucleotides.

7. Drying process according to claim 6, wherein the yeast extract is rich in guanosine - 5' - monophosphate (GMP) and/or in inosine - 5' - monophosphate (IMP).

8. Drying process according to claim 6 or 7, wherein the amount q1 of yeast extract is comprised between 3% and 6% in weight of the amount Q₁ of support.

9. Drying process according to anyone of claims 1 to 8, wherein the amount Q₁ of support is determined function of the dry matter weight of the amount Q₀ of frozen vegetal product.

10. Drying process according to claim 9, wherein the ratio between the dry matter weight and the weight of the amount Q₁ of support is determined for a given vegetal product.

11. Drying process according to anyone of claims 1 to 10, wherein the amount Q₀ is comprised between 60% and 80% of the total weight involved, in particular comprised between 65% and 75% by weight.

## Patentansprüche

1. Verfahren zur Trocknung eines pflanzlichen Produkts, wie etwa von Gewürzen oder Kräutern, wobei das besagte Verfahren folgende Schritte umfasst :
- eine Menge Q₀ eines tiefgefrorenen pflanzlichen Produkts vorsehen;
- im trockenen Zustand eine Menge qₑ eines Elektrolyts einer Menge q_{g} eines Kohlenhydrats so hinzufügen und mischen, dass man eine homogene Menge Q₁ eines essbaren, wasserlöslichen Trägers erhält, wobei dieser Träger kein Mononatriumglutamat (MSG) enthält ;
- die Menge Q₀ eines tiefgefrorenen pflanzlichen Produkts der Menge Q₁ eines Trägers so hinzufügen und mischen, dass man ein mit dem Träger homogen gemischtes, tiefgefrorenes pflanzliches Produkt erhält ;
- das Gemisch bei Temperaturen zwischen 50° und 170° C bis zur Trocknung erhitzen.

2. Verfahren zur Trocknung gemäss Anspruch 1, wobei das pflanzliche Produkt bei Temperaturen zwischen -15°C und -20°C tiefgefroren wird.

3. Verfahren zur Trocknung gemäss Anspruch 1 oder 2, wobei der Elektrolyt Natriumchlorid und/oder Kaliumchlorid enthält.

4. Verfahren zur Trocknung gemäss einem der Ansprüche 1 bis 3, wobei die Kohlenhydrate hydriert sind.

5. Verfahren zur Trocknung gemäss einem der Ansprüche 1 bis 4, wobei der Zusatzstoff mit einer Maximaltemperatur von 125 °C bis 135 °C erhitzt wird.

6. Verfahren zur Trocknung gemäss einem der Ansprüche 1 bis 5, wobei der Träger zusätzlich eine Menge qₗ eines Hefeextrakts mit hohem Nukleotidanteil enthält.

7. Verfahren zur Trocknung gemäss Anspruch 6, wobei der Hefeextrakt einen hohen Anteil an Guanosin-5'-Monophosphat (GMP) und/oder Inosin-5'-Monophosphat (IMP) enthält.

8. Verfahren zur Trocknung gemäss einem der Ansprüche 6 oder 7, wobei die Menge q1 des Hefeextrakts 3% bis 6% des Gewichts der Menge Q₁ des Trägers ausmacht.

9. Verfahren zur Trocknung gemäss einem der Ansprüche 1 bis 8, wobei die Menge Q₁ des Trägers in Funktion der Menge Q₀ des tiefgefrorenen pflanzlichen Produkts bestimmt wird.

10. Verfahren zur Trocknung gemäss Anspruch 9, wobei das Verhältnis zwischen dem Trockenprodukt und dem Gewicht der Menge Q₁ des Trägers für ein bestimmtes pflanzliches Produkt bestimmt wird.

11. Verfahren zur Trocknung gemäss einem der Ansprüche 1 bis 10, wobei die Menge Q₀ zwischen 60% und 80% des betreffenden Gesamtgewichts liegt, insbesondere zwischen 65% und 75% des Gewichts.
